# FASCICULE DE BREVET EUROPEEN

(11) **EP 1 956 281 B1**
(45) Date de publication et mention de la délivrance du brevet: **20.04.2011**
(21) Numéro de dépôt: 08290092.9
(22) Date de dépôt: 01.02.2008
(51) Int. Cl.: F16L 55/033

(54) **Dispositif d'atténuation des bruits pour circuit d'admission de fluide gazeux**
Vorrichtung zur Schalldämpfung für Zuführkreislauf von gasförmigen Fluiden
Noise-reduction device for a gaseous fluid intake circuit

(30) Priorité: 02.02.2007 FR 0700764
(43) Date de publication de la demande: 13.08.2008
(73) Titulaire: Tristone Flowtech Solutions (TFS), 44470 Carquefou (FR)
(72) Inventeur: Bosio, Raphaël, 44450 Saint Julien de Concelles (FR)
(74) Mandataire: Laget, Jean-Loup

(56) Documents cités:
- DE-A1- 19 949 241
- FR-A- 654 401
- US-A- 4 327 817

## Description

La présente invention concerne un procédé de fabrication d'un dispositif d'atténuation des bruits pour circuit d'admission de fluide gazeux, en particulier pour moteur à combustion interne, ou appareil de climatisation, du type comprenant un conduit d'admission axial communiquant avec des chambres de résonance en disposition coaxiale autour dudit conduit axial, ainsi qu'un tel dispositif d'atténuation des bruits.

Les problèmes d'insonorisation sur le circuit d'admission d'air des moteurs à combustion interne sont de deux types. Sur tous les moteurs, il existe, une composante acoustique basse fréquence 20 hertz à 1000 hertz générée par l'ouverture et la fermeture périodiques des soupapes. Elle se propage et rayonne à l'entrée du circuit d'air. Sur les moteurs suralimentés, il existe en outre une composante acoustique haute fréquence de 1000 hertz à 4000 hertz générée par le turbo compresseur. Cette composante se propage et rayonne également à travers les conduits et à l'entrée d'air. Un problème similaire est constaté en ce qui concerne les bruits issus du fonctionnement de l'appareil de climatisation susceptible d'équiper un tel véhicule.

Afin d'atténuer ces bruits sur une bande de fréquence donnée, des résonateurs ou des chambres acoustiques disposées en série le long du conduit d'admission d'air sont des solutions très utilisées. Ces chambres sont réalisées à partir d'une coquille externe comprenant plusieurs cavités qui sont intégrées autour du conduit, lui-même muni d'orifices permettant de réaliser le couplage entre le fluide et les cavités. Ces pièces sont réalisées en métal par sertissage et soudure ou en injection plastique. Un exemple de réalisation d'une telle construction est notamment fourni par les brevets allemands DE 199 56 165 ou DE 199 56 172. Dans ces modes de réalisation, on dispose de deux conduits, que l'on enfile l'un dans l'autre avant soudure. Cette solution, performante sur le plan acoustique, se révèle encombrante en longueur. En outre, l'étanchéité entre chambres ne peut être assurée, amenant à des perturbations se traduisant notamment, par une baisse des performances acoustiques dudit composant placé en sortie du turbocompresseur du moteur. Une autre solution consiste à disposer les chambres, non plus les unes à la suite des autres sur le conduit du circuit d'admission d'air, mais les unes autour des autres par l'intermédiaire d'un montage de type gigogne. Chaque chambre est alors formée d'une portion de conduit débouchant dans une autre chambre, délimitée au moyen d'un conduit s'étendant à recouvrement partiel sur le conduit de la chambre qu'il entoure. Il en résulte une construction étagée, créant une perturbation importante de l'écoulement du flux. Une telle solution, décrite en particulier dans le brevet DE 199 56 166 n'est donc pas satisfaisante.

Le document EP-1.260.697 propose également un dispositif d'atténuation des bruits formé d'un tube interne entouré d'un tube externe. Le tube interne et le tube externe sont chacun réalisés en deux parties d'extrémité cintrée au niveau de la demi-longueur du dispositif pour former une zone d'aboutement desdites parties du tube correspondant. Le tube interne et le tube externe délimitent ainsi deux chambres de résonance fermées au niveau des parties cintrées desdits tubes interne et externe. Une telle solution nécessite d'assembler quatre parties de tubes pour ne délimiter, entre les tubes interne et externe ainsi formés, que deux chambres de résonance. En outre, un tel assemblage par aboutement des parties des tubes interne et externe ne permet pas de régler au moment de la fabrication du dispositif d'atténuation la dimension des chambres de résonance. Le document DE 10 2005 005 865 propose également un dispositif d'atténuation des bruits de conception similaire à celui proposé dans le document EP-1.260.697.

Un but de la présente invention est de proposer un dispositif d'atténuation des bruits, qui, à performance acoustique équivalente avec les dispositifs de l'état de la technique, présente un encombrement en longueur réduit ou, en d'autres termes, qui à encombrement équivalent avec les dispositifs de l'état de la technique, présente une performance acoustique accrue.

Un autre but de la présente invention est de proposer un dispositif d'atténuation des bruits qui permette de régler aisément la dimension d'au moins une chambre de résonance lors de la fabrication du dispositif d'atténuation des bruits.

A cet effet, l'invention a pour objet un procédé de fabrication d'un dispositif d'atténuation des bruits pour circuit d'admission de fluide gazeux, en particulier pour moteur à combustion interne, ce dispositif d'atténuation des bruits, du type comprenant un conduit d'admission axial communiquant avec des chambres de résonance en disposition co-axiale autour dudit conduit axial, étant formé d'au moins deux sections de conduits dites l'une maître, l'autre esclave, chaque section de conduit présentant au moins une portion axiale, délimitant une portion dudit conduit axial, suivie d'une portion élargie formant chambre de résonance, la ou, chaque portion élargie de l'une des sections dite maître étant prolongée au moins d'une autre portion axiale, caractérisé en ce qu'on réalise chaque section de conduit d'une seule pièce, en ce que l'on applique à emboîtement ladite portion élargie de la ou d'au moins une section de conduit esclave sur ladite portion élargie de la ou d'au moins une section de conduit maître, en ce qu'on fait coulisser l'une par rapport à l'autre lesdites portions élargies emboîtées pour régler la dimension et, éventuellement, le nombre de chambres de résonance et en ce qu'on solidarise lesdites sections de conduit par leur portion élargie dans la position d'emboîtement relative choisie.

Les portions axiales des sections de conduit forment, à l'état aligné desdites sections de conduit, le conduit axial, tandis que les portions élargies forment, à l'état assemblé desdites sections de conduit, les chambres de résonance en disposition co-axiale autour du conduit axial.

Dans cette conception, bien que les chambres de résonance soient toujours disposées les unes à la suite des autres le long du conduit d'admission axial obtenu par assemblage des sections de conduits disposées alignées et contiguës à recouvrement partiel, l'encombrement en longueur du dispositif d'atténuation des bruits est réduit par rapport à l'état de la technique, du fait que la plupart des chambres de résonance ne sont plus séparées l'une de l'autre par une portion axiale obtenue par constriction comme dans l'état de la technique.

En outre, une construction à deux chambres peut être obtenue à l'aide d'un dispositif à deux sections de conduit, assemblées par une seule soudure.

Le nombre de chambres, le volume des chambres et les dimensions de l'entrée des chambres peuvent être aisément modifiés en raison de la conception modulaire du dispositif d'atténuation des bruits, le module de base étant formé par l'assemblage d'une section de conduit maître et d'une section de conduit esclave. En particulier, lors de fabrication du dispositif, il est possible de régler aisément la longueur d'une chambre de résonance délimitée par les portions élargies des sections maître et esclave, en faisant coulisser la face intérieure de la portion élargie de la section esclave sur la face extérieure de la portion élargie de la section maître. Le montage à emboîtement partiel coulissant permet également d'agir sur les dimensions de l'entrée de ladite chambre de résonance.

Enfin, dans cette conception, la paroi externe du dispositif ainsi réalisé peut être formée entre les portions axiales d'extrémité, au moins par coopération et alternance des portions élargies des sections de conduit maître et esclave, les portions élargies d'une même section pouvant être séparées par au moins une portion axiale.

Bien entendu, chaque portion élargie d'une section est de diamètre supérieur au diamètre des portions axiales qu'elle prolonge et/ou qu'elle précède. De la même manière, sauf montage à force, la portion élargie d'une section de conduit esclave est de diamètre légèrement supérieur au diamètre de la portion élargie de la section de conduit maître à laquelle elle se raccorde par un montage à emboîtement coulissant avec solidarisation par soudure ou autre desdites portions élargies entre elles.

De préférence, on réalise chaque section de conduit par sectionnement d'un conduit de base muni de constrictions obtenues généralement par hydroformage pour délimiter la ou les portion(s) axiale(s) et la ou les portion(s) élargie(s).

L'invention a également pour objet un dispositif d'atténuation des bruits, obtenu notamment par mise en oeuvre du procédé tel que décrit ci-dessus, pour circuit d'admission de fluide gazeux, en particulier pour moteur à combustion interne, ou appareil de climatisation, du type comprenant un conduit d'admission axial communiquant avec des chambres de résonance en disposition coaxiale autour dudit conduit axial, caractérisé en ce que le dispositif est formé d'au moins deux sections de conduit dites l'une maître, l'autre esclave, chaque section de conduit, réalisée d'une seule pièce, présentant au moins une portion axiale, délimitant une portion dudit conduit axial, suivie d'une portion élargie formant chambre de résonance, la, ou chaque, portion élargie de l'une des sections de conduit dite maître étant prolongée au moins d'une autre portion axiale, lesdites sections de conduit maître et esclave étant solidarisées en alignement l'une à l'autre par leurs portions élargies, ladite portion élargie de la ou d'au moins une section de conduit esclave s'appliquant à emboîtement sur ladite portion élargie de la ou d'au moins une section de conduit maître, les dimensions de la zone d'emboîtement étant fonction de la dimension et, éventuellement, du nombre de chambres de résonance souhaitées.

Selon une première caractéristique avantageuse du dispositif selon l'invention, à l'état solidarisé en alignement des sections de conduit maître et esclave par leurs portions élargies, la portion élargie de raccordement de la section de conduit esclave vient à recouvrement d'une portion axiale de la section de conduit maître.

Selon une autre caractéristique avantageuse du dispositif selon l'invention, la ou au moins l'une des sections de conduit dite maître présente au moins un conduit cylindrique axial suivi d'un élargissement cylindrique co-axial audit conduit et délimitant le volume de la chambre de résonance, cet élargissement étant prolongé d'un conduit cylindrique axial, les conduits cylindriques axiaux étant, de préférence, de diamètres identiques.

Selon une autre caractéristique avantageuse du dispositif selon l'invention, la ou au moins l'une des sections de conduit maître présente, interposées entre deux portions axiales, au moins deux portions élargies séparées l'une de l'autre par une portion axiale.

Selon une autre caractéristique avantageuse du dispositif selon l'invention, la ou au moins l'une des sections de conduit dite esclave est formée d'un conduit cylindrique axial suivi d'un élargissement cylindrique coaxial audit conduit, cet élargissement étant solidarisé à l'élargissement ou portion élargie d'une section de conduit maître par son bord libre pour former une chambre de résonance.

Selon un mode de réalisation particulier de l'invention, le dispositif comporte au moins deux sections de conduit dites esclaves comportant chacune une portion axiale et une portion élargie ou élargissement, les deux sections de conduits esclaves étant disposées de part et d'autre d'une section de conduit dit maître comportant au moins une portion élargie ou élargissement entre deux portions axiales, lesdites sections étant solidarisées en alignement entre elles par leurs portions élargies pour former autour et le long du conduit axial une succession de chambres de résonance.

Selon une autre caractéristique avantageuse du dispositif selon le mode de réalisation particulier l'invention décrit ci-dessus, au moins une des portions axiales de la section de conduit maître est pourvue d'au moins d'un orifice de communication de la portion axiale avec l'extérieur de ladite section.

Selon une autre caractéristique avantageuse du dispositif selon le mode de réalisation particulier l'invention décrit ci-dessus, une seule soudure raccorde simultanément les portions élargies des deux sections de conduit esclaves à la portion élargie de la section de conduit maître.

Selon une autre caractéristique avantageuse du dispositif selon l'invention, chaque section de conduit est une section métallique assemblée à une autre section de conduit par soudure.

L'invention sera bien comprise à la lecture de la description suivante, d'exemples de réalisations, en référence aux dessins annexés dans lesquels :
la figure 1 représente une vue schématique en coupe d'un dispositif d'atténuation des bruits conforme à l'invention à deux sections de conduit l'une maître, l'autre esclave délimitant deux chambres de résonance, disposées en série l'une derrière l'autre ;
la figure 2 représente une vue schématique en coupe d'un dispositif d'atténuation des bruits à deux sections de conduit esclaves et une section de conduit maître délimitant trois chambres de résonance, disposées en série l'une derrière l'autre le long du conduit ;
la figure 3 représente une vue en coupe d'un autre mode de réalisation d'un dispositif d'atténuation des bruits à trois chambres de résonance de diamètre différent;
la figure 4 représente une vue en coupe d'un dispositif d'atténuation des bruits conforme à la figure 2, à trois chambres de résonance, la section de conduit maître étant équipée sur ses portions axiales, d'ouvertures, débouchant dans lesdites chambres de résonance ;
la figure 5 représente une vue en coupe d'un dispositif d'atténuation des bruits à quatre chambres de résonance et trois sections de conduit ;
la figure 6 représente une vue schématique en coupe d'un autre mode de dispositif d'atténuation des bruits à cinq chambres de résonance et trois sections de conduit, et
la figure 7 représente sous forme de vue partielle en perspective, la partie de dessus ayant été omise, une section de conduit maître et deux sections de conduit esclave pour la réalisation d'un dispositif d'atténuation des bruits, conforme à celui représenté à la figure 2.

Comme mentionné ci-dessus, le dispositif d'atténuation, objet de l'invention est plus particulièrement destiné à atténuer, sur un circuit d'admission d'air des bruits haute fréquence, c'est-à-dire situés dans une plage de fréquence s'étendant de 1000 hertz à 4000 hertz, bien qu'il puisse s'appliquer à toute autre. Ce circuit peut constituer le circuit d'admission d'air d'un moteur à combustion interne suralimenté ou non, ou d'un appareil de climatisation. Un tel circuit d'admission d'air pour moteur à combustion interne peut comporter un moteur, un turbocompresseur, et un conduit d'admission d'air, s'étendant depuis l'entrée d'air frais jusqu'au moteur. Une section de ce conduit d'admission d'air est aménagée pour être équipée d'un dispositif d'atténuation des bruits conforme à l'invention. Ce dispositif d'atténuation des bruits, peut être disposé en amont, ou en aval du turbocompresseur, lorsque ce dernier est présent. Ce dispositif d'atténuation des bruits est donc destiné à s'intégrer au circuit d'admission d'air.

Ce dispositif d'atténuation des bruits est du type comprenant un conduit 2 d'admission axial, communiquant avec des chambres 3 de résonance en disposition co-axiale autour dudit conduit 2 axial, lesdites chambres étant disposées les unes à la suite des autres autour du conduit 2 d'admission axial, s'intégrant au circuit d'admission d'air.

De manière caractéristique à l'invention, ce dispositif 1 d'atténuation des bruits est formé d'au moins deux sections de conduit, l'une, représentée en 4 aux figures, dite section de conduit maître, et l'autre représentée en 8 aux figures, dite section de conduit esclave. Chaque section de conduit, maître ou esclave, présente au moins une portion axiale, suivie d'une portion élargie formant chambre de résonance. Ainsi, la section 4 de conduit maître présente une portion 5 axiale, suivie d'une portion 6 élargie, cette portion 6 élargie, étant prolongée au moins d'une portion 7 axiale. La section 8 de conduit esclave présente quant à elle, une portion 9 axiale suivie d'une portion dite élargie formant chambre de résonance. Les sections de conduit maître et esclave, sont solidarisées en alignement l'une à l'autre par leurs portions 6 et 10 élargies.

Ainsi à l'état solidarisé en alignement, ces sections de conduit maître et esclave s'emboîtent au moins partiellement. Ladite portion 10 élargie de la ou d'au moins une section 8 de conduit esclave présente un bord libre qui s'applique à emboîtement sur ladite portion élargie 6 de la ou d'au moins une section 4 de conduit maître. Les dimensions de la zone d'emboîtement sont fonction de la dimension et, éventuellement, du nombre de chambres de résonance souhaitées. Dans cette configuration, la portion 10 élargie de raccordement de la section 8 de conduit esclave, vient à recouvrement d'une portion 7 axiale de la section 4 de conduit maître. Ces dispositions permettent de faire varier la dimension de l'entrée de la chambre de résonance ainsi constituée, par simple variation de la longueur de la zone de montage à recouvrement entre lesdites sections et, éventuellement, par simple variation de la longueur de la portion 7 axiale de la section 4 de conduit maître. Cette variation de dimension a une incidence sur les performances acoustiques du dispositif d'atténuation des bruits.

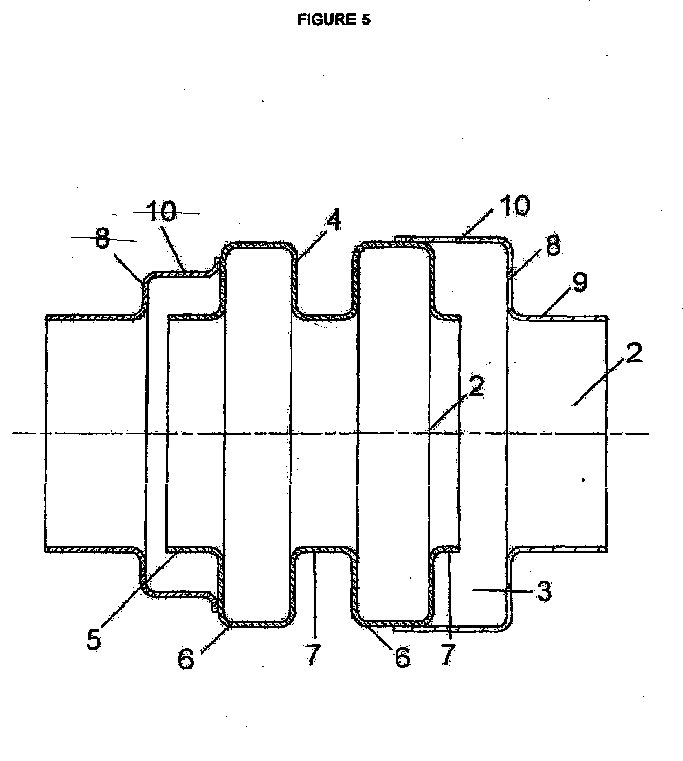

Dans les exemples représentés, la section 4 de conduit dite maître, réalisée d'une seule pièce présente au moins un conduit 5 cylindrique axial, suivi d'un élargissement 6 cylindrique co-axial audit conduit 5 et délimitant le volume de la chambre 3 de résonance, cet élargissement étant prolongé par un conduit 7 cylindrique axial, les conduits 5, 7 cylindriques axiaux servant à la délimitation du conduit 2 axial et étant de préférence de diamètre identique. Dans ce mode de réalisation la portion 5 axiale est donc réalisée sous forme d'un conduit cylindrique, tandis que la portion 6 élargie est réalisée également sous forme d'un conduit cylindrique co-axial au conduit 5 et de dimension supérieure à ce dernier. Cette section 4 de conduit maître peut présenter, interposée entre deux portions 5, 7 axiales, au moins deux parties 6 élargies, séparées l'une de l'autre par une portion 7 axiale. Un tel exemple de réalisation est représenté à la figure 5. Bien évidemment, le nombre de portions 6 élargies de la section 4 de conduit maître peut varier à l'infini en fonction du nombre de chambres de résonance souhaité au niveau du dispositif d'atténuation des bruits.

Ces portions 6 élargies réalisées sous forme de conduits cylindriques coaxiaux aux portions axiales sont de préférence de diamètre identique d'une portion à l'autre. La section 8 de conduit dite esclave, réalisée également d'une seule pièce, est formée d'un conduit 9 cylindrique axial, suivi d'un élargissement 10 cylindrique co-axial audit conduit 9. Cet élargissement 10 est solidarisé à l'élargissement ou portion 6 élargie d'une section 4 de conduit maître par son bord libre, pour former une chambre de résonance. La portion 9 axiale, ou conduit 9 cylindrique de la section 8 de conduit esclave, présente un diamètre identique aux conduits 5, 7 cylindriques axiaux de la section de conduit maître. L'élargissement ou la portion 10 élargies de la section 8 de conduit esclave, présente quant à lui, un diamètre identique ou supérieur à celui de la ou des portions 6 élargies ou élargissements de la section 4 de conduit maître.

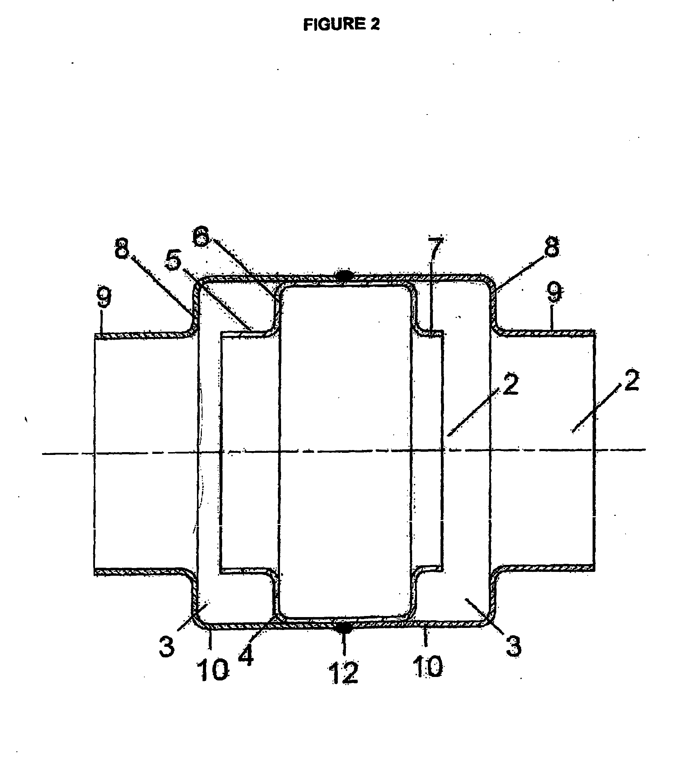

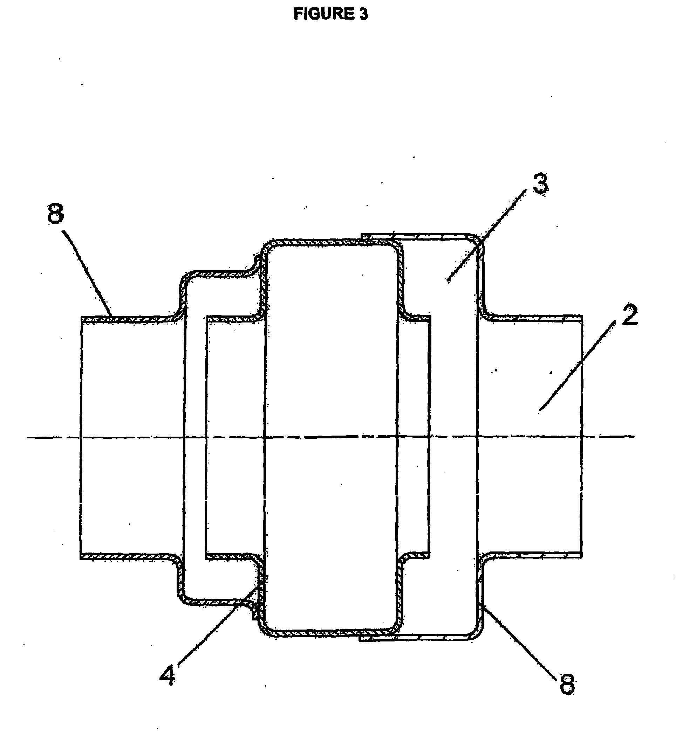

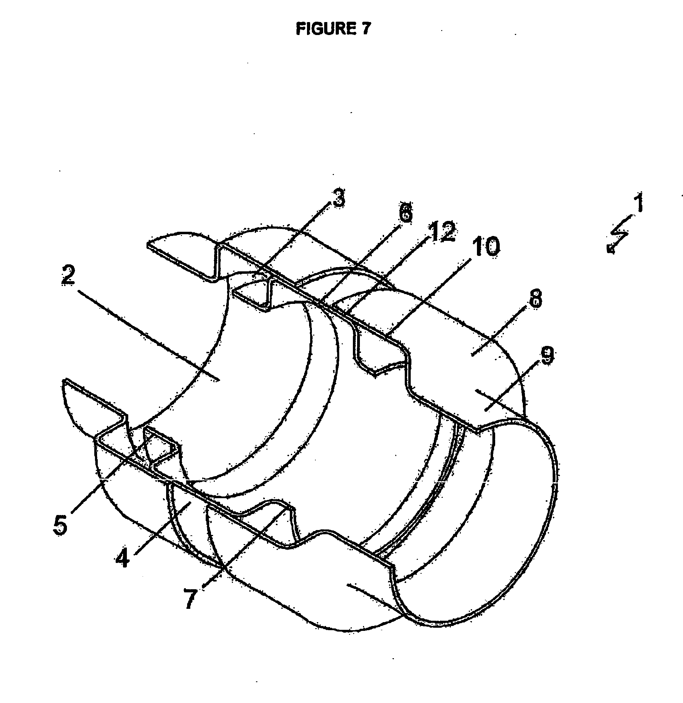

Lorsque le dispositif comporte au moins trois sections de conduit, à savoir une section maître et deux sections esclaves, tel qu'illustré aux figures 2 à 7, le raccordement des sections de conduit maître et esclave, par leurs portions élargies, peut s'opérer de différentes manières. Ainsi, la portion 10 élargie de la section 8 de chaque conduit esclave, peut être raccordée à la portion 6 élargie de la section 4 de conduit maître, par la face interne de son bord libre venant s'appliquer sur le sommet de la portion 6 élargie de la section 4 de conduit maître, comme l'illustrent les figures 2, 4 et 7. En variante, comme l'illustrent les figures 3, 5 et 6, la portion 10 élargie de l'une des sections 8 de conduit esclave peut être solidarisée à la portion 6 élargie de la section 4 de conduit maître par application de la tranche de ladite portion 10 élargie contre un flanc de la portion 6 élargie de la section 4 de conduit maître. En effet, la portion 6 élargie de la section 4 de conduit maître forme un renflement ou bourrelet circonférentiel externe de ladite section 4, comportant un sommet et des flancs latéraux. Ce renflement délimite à l'intérieur de la section 4 une gorge annulaire à fond circulaire plat et à bords parallèles. Les flancs latéraux de la portion 6 élargie sont sensiblement parallèles entre eux et perpendiculaires au sommet de la portion 6 élargie, ce sommet 6 s'étendant sensiblement parallèlement à la paroi constitutive des portions axiales. En conséquence, le raccordement d'une des sections 8 de conduit esclave, et en particulier du bord libre de la portion 10 élargie de cette section 8 de conduit à la section 4 de conduit maître, peut s'opérer au niveau des flancs, tandis que le raccordement de l'autre section 8 s'opère par emboîtement coulissant au niveau du sommet de la (ou des) portion(s) 6 élargie(s) de la section 4 de conduit maître. Ces dispositions permettent de faire varier le volume des chambres ainsi constituées. Dans cette variante d'assemblage, l'un des flancs de la portion 6 élargie de la section 4 de conduit maître, participe à la délimitation de la chambre de résonance en coopération avec la portion 10 élargie de la section 8 de conduit esclave formée uniquement d'un flanc et d'un sommet. Cette chambre 3 de résonance ainsi constituée communique avec le conduit 2 axial par l'intermédiaire d'une ouverture annulaire, ménagée par l'espace laissé libre entre deux portions axiales des deux sections de conduit.

Dans les exemples représentés, chaque section 4, 8 de conduit est une section métallique assemblée à une autre section de conduit, par soudure. A chaque fois, chaque section de conduit est réalisée d'une seule pièce.

Comme illustré aux figures, les sections de conduit esclave et maître sont montées à emboîtement coulissant jusqu'à une position relative choisie dans laquelle lesdites sections sont solidarisées entre elles, la section de conduit maître étant partiellement logée à l'intérieur de la section de conduit esclave et le bord libre de la portion élargie de la section esclave venant coiffer la face extérieure de la (ou des) portion(s) élargie(s) de la section maître.

Divers modes de réalisation d'un dispositif d'atténuation des bruits vont à présent être décrits en détail.

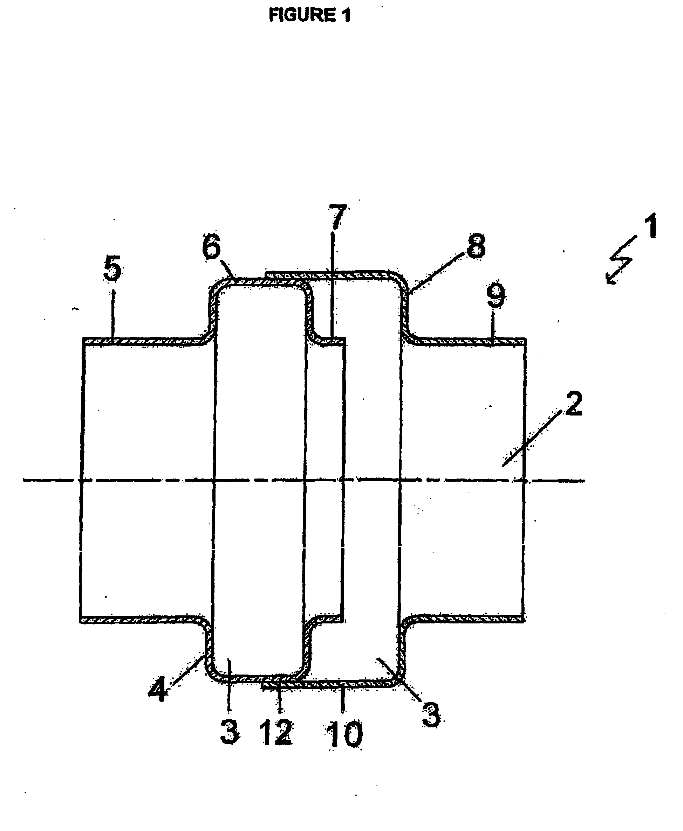

La figure 1 illustre un dispositif d'atténuation des bruits formé de deux sections de conduit, l'un, 4, maître, l'autre, 8, esclave. La section de conduit maître réalisée d'une seule pièce est formée d'une portion 5 axiale, suivie d'une portion 6 élargie, elle-même prolongée d'une portion 7 axiale, les portions 5 et 7 axiales étant réalisées sous forme de conduits cylindriques de même diamètre. La portion 6 élargie permet la délimitation d'une chambre 3 de résonance débouchant dans un conduit 2 axial. La section 8 de conduit esclave comporte, quant à elle, une portion 9 axiale, suivie d'une portion 10 élargie, la portion 9 axiale étant réalisée sous forme d'un conduit cylindrique de même diamètre que les portions 5, 7 axiales. Les portions 5, 7, 9 axiales des sections de conduit forment, à l'état aligné desdites sections de conduit, le conduit 2 axial, tandis que les portions 6, 10 élargies forment, à l'état assemblé desdites sections de conduit, les chambres 3 de résonance en disposition co-axiale au conduit 2 axial, ces chambres étant disposées alignées, les unes derrière les autres le long dudit conduit.

Du fait de la configuration retenue pour les sections de conduit, on obtient deux chambres de résonance successives, formée l'une par la portion 6 élargie de la section 4 de conduit maître, l'autre par coopération de la portion 10 élargie et du flanc de la portion 6 élargie des sections de conduit esclave et maître. Les sections de conduit sont ici solidarisées l'une à l'autre en alignement par leur portion élargie, la portion 10 élargie de la section 8 de conduit esclave venant coiffer le sommet et s'appliquer à emboîtement sur la portion 6 élargie de la section 4 de conduit maître. L'ouverture ou entrée de la chambre de résonance ménagée par l'assemblage des deux sections de conduit est délimitée par l'espace laissé libre en la portion 7 axiale de la section 4 de conduit maître, et la portion 9 axiale de la section 8 de conduit esclave. Cette ouverture se présente sous forme d'une ouverture circulaire annulaire. Ce mode de réalisation tel que représenté à la figure 1 constitue l'élément de base d'un tel dispositif 1 d'atténuation des bruits. Il permet de délimiter, à l'aide de deux sections de conduit, assemblées par une seule soudure, représentée en 12 à la figure 1, l'obtention de deux chambres de résonance successives. L'encombrement en longueur d'un tel dispositif 1 d'atténuation des bruits est réduit.

La figure 2 illustre un autre mode de réalisation d'un dispositif 1 d'atténuation des bruits conforme à l'invention. Ce dispositif 1 d'atténuation des bruits comporte au moins deux sections de conduit esclaves, comportant chacune une portion 9 axiale et une portion 10 élargie ou élargissement, les deux sections 8 de conduit esclaves étant disposées de part et d'autre d'une section 4 de conduit dit maître, comportant au moins une portion 6 élargie ou élargissement, entre deux portions 5, 7 axiales, lesdites sections 4, 8 étant solidarisées en alignement entre elles par leurs portions 6,10 élargies, pour former autour et le long du conduit 2 axial une succession de chambres 3 de résonance. Dans ce mode de réalisation, la section 4 de conduit maître est identique à celle décrite dans la figure 1, tandis que les sections 8 de conduit esclaves sont également identiques à celles décrites dans la figure 1. Elles sont simplement présentes au nombre de deux alors que dans la figure 1 une seule section 8 de conduit esclave était présente. Grâce à cette disposition, on obtient ainsi trois chambres de résonance successives, formées par assemblage de trois sections de conduit, l'assemblage étant obtenu à l'aide de deux soudures, une soudure ayant été représentée en 12 à la figure 2. Là où les soudures sont positionnées à chaque fois dans la zone d'assemblage des portions élargies, des sections de conduit maître et esclave, dans le mode de réalisation de la figure 2, l'utilisation d'une seule soudure raccordant simultanément les portions 10 élargies des deux sections 8 de conduit esclaves à la portion 6 élargie de la section 4 de conduit maître, est représentée. La figure 3 illustre une variante de la figure 2 dans laquelle les sections 8 de conduit esclave disposées de part et d'autre de la section de conduit maître, ne sont plus identiques d'une section de conduit à une autre mais présentent des dimensions différentes pour faire varier les volumes des chambres.

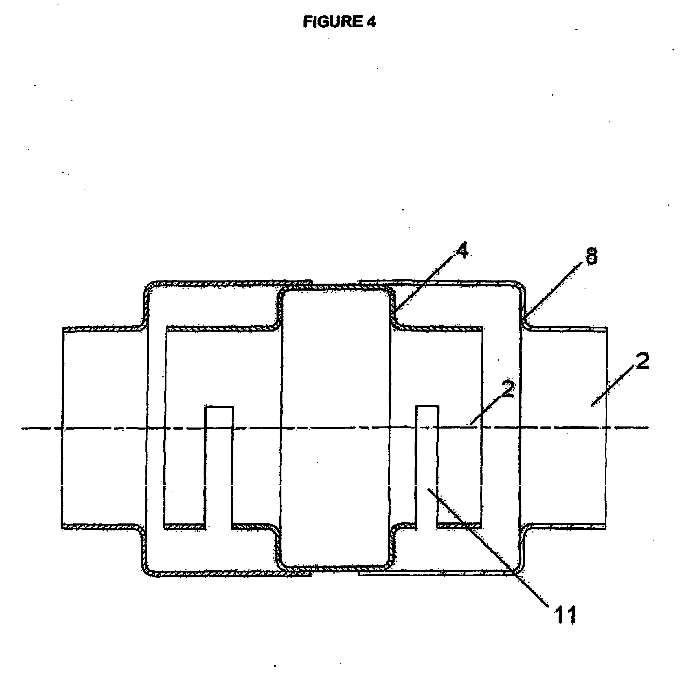

Dans le mode de réalisation réalisé à la figure 4, au moins une des portions 5, 7 axiales de la section 4 de conduit maître est pourvue d'au moins un orifice 11 de communication de la portion 5, 7 axiale avec l'extérieur de la section 4 correspondant au volume délimité par la portion 10 élargie de la section 8 de conduit esclave. Dans le mode de réalisation représenté à la figure 4, les deux portions axiales sont équipées d'un orifice 11 de communication. Toutefois, de manière équivalente, une seule portion axiale aurait pu être équipée d'un tel orifice 11 de communication. Cette disposition permet à nouveau, de faire varier les performances d'atténuation des bruits du dispositif.

La figure 5 illustre, à nouveau un autre mode de réalisation d'un dispositif d'atténuation des bruits conforme à l'invention, qui se distingue de celui représenté à la figure 3, par le fait que la section de conduit maître, présente, interposée entre deux portions 5, 7 axiales, deux portions 6 élargies séparées l'une de l'autre par une portion 7 axiale. Le nombre de chambres de résonance obtenu est ainsi égal à 4.

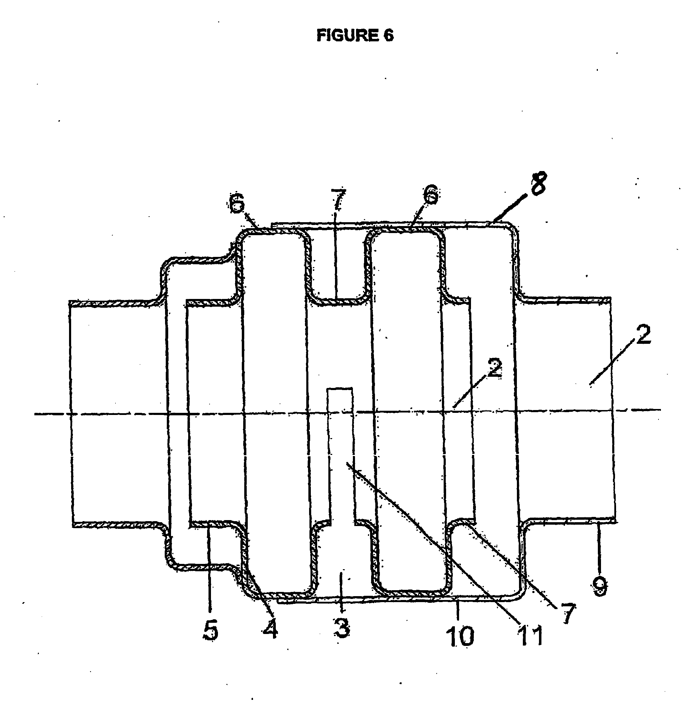

La figure 6 illustre encore un autre mode de réalisation d'un dispositif d'atténuation des bruits conforme à l'invention. Dans ce dispositif d'atténuation des bruits, la section 8 de conduit esclave présente une portion 10 élargie qui s'étend au-delà de la première portion 6 élargie de la section de conduit maître, pour venir se raccorder à la seconde portion 6 élargie de la section 4 de conduit maître, permettant ainsi de délimiter par coopération avec la portion 7 axiale, s'étendant entre deux portions 6 élargies de la section 4 de conduit maître, une nouvelle chambre 3 de résonance, qui communique avec le conduit 2 axial, par l'intermédiaire d'un orifice 11 de communication de la portion 7 axiale de la section 4 de conduit maître. On obtient ainsi, grâce à cette disposition, un dispositif d'atténuation des bruits formé de trois sections de conduit à cinq chambres de résonance, tout en maintenant le nombre de soudures à deux.

Ces exemples illustrent ainsi la possibilité de faire varier le nombre de chambres du dispositif d'atténuation des bruits, sans augmenter ni le nombre de composants du dispositif d'atténuation des bruits, formé de deux ou trois sections de conduits assemblées, ni le nombre de soudures à effectuer, ce nombre de soudures étant toujours inférieur ou égal à deux. Cette disposition modulaire est également le fruit d'un procédé de fabrication extrêmement simple. En effet, pour la fabrication d'un dispositif d'atténuation des bruits du type précité, chaque section 4, 8 de conduit est issue du sectionnement d'un conduit de base muni de constrictions, obtenues généralement par hydroformage pour délimiter la ou les portion(s) axiale(s) formées par constriction et la ou les portion(s) élargie(s). Les constrictions peuvent également être obtenues par emboutissage ou par un autre procédé notamment pour les sections esclaves. Ainsi, par exemple, pour la réalisation d'un dispositif d'atténuation des bruits conforme à celui représenté à la figure 1, il suffit au départ, de disposer de deux sections de conduit et de ménager sur l'une de ces sections de conduit, deux constrictions pour former de part et d'autre d'une portion 6 élargie les portions 5, 7 axiales de la section 4 de conduit maître et de ménager sur l'autre conduit, une seule constriction de manière à délimiter la portion 9 axiale d'un côté de la portion 10 élargie de la section 8 de conduit esclave. Une fois ces constrictions réalisées, les deux sections de conduit peuvent être assemblées l'une à l'autre par soudure, après avoir découper à longueur lesdites sections de conduit, en fonction des dimensions de portions axiales souhaitées et du volume des chambres souhaité. On comprend ainsi qu'il suffit de faire varier par exemple la dimension de la portion 10 élargie, pour obtenir un volume de chambres plus ou moins important. De même, il suffit de faire varier la dimension de la portion 7 axiale pour faire varier la dimension de l'entrée de cette chambre. Cette variation de dimension peut être obtenue au moment de l'assemblage, en faisant varier la zone de recouvrement des portions élargies desdites sections de conduit, et, éventuellement, en faisant varier l'emplacement du sectionnement dudit conduit. Pour faire varier la zone de recouvrement des portions élargies, on fait coulisser l'une par rapport à l'autre lesdites portions élargies emboîtées pour régler la dimension et, éventuellement, le nombre de chambres de résonance. Puis, on solidarise lesdites sections de conduit par leur portion élargie dans la position d'emboîtement relative choisie.

Bien évidemment, l'invention a encore pour objet un circuit d'admission d'air pour moteur suralimenté ou appareil de climatisation, du type équipé d'un dispositif d'atténuation des bruits, du genre comprenant un conduit d'admission axial, communicant avec des chambres de résonance en disposition co-axiale audit conduit axial, ce dispositif d'atténuation des bruits étant du type précité.

Dans les dispositions telles qu'illustrées aux figures 3 à 7, la paroi externe du dispositif d'atténuation des bruits est donc formée au moins par coopération et alternance des portions élargies des sections de conduit maître et esclave.

## Revendications

1. Procédé de fabrication d'un dispositif d'atténuation des bruits intégré à un circuit d'admission d'air pour moteur à combustion interne ou appareil de climatisation, ce dispositif d'atténuation des bruits, comprenant un conduit (2) axial d'admission s'intégrant audit circuit d'admission d'air en formant une section de conduit d'admission d'air dudit circuit, ce conduit (2) axial d'admission communiquant avec des chambres (3) de résonance en disposition coaxiale autour dudit conduit (2) axial et étant formé d'au moins deux sections (4, 8) de conduits dites l'une (4) maître, l'autre (8) esclave, chaque section (4, 8) de conduit présentant au moins une portion (5, 9) axiale, délimitant une portion dudit conduit axial (2), suivie d'une portion (6, 10) élargie formant chambre de résonance, la ou, chaque portion élargie de l'une (4) des sections dite maître étant prolongée au moins d'une autre portion (7) axiale,
**caractérisé en ce qu'**on réalise chaque section (4, 8) de conduit d'une seule pièce, **en ce que** l'on applique à emboîtement ladite portion (10) élargie de la ou d'au moins une section (8) de conduit esclave sur ladite portion élargie (6) de la ou d'au moins une section (4) de conduit maître, **en ce qu'**on fait coulisser l'une par rapport à l'autre lesdites portions élargies (6, 10) emboîtées pour régler la dimension et, éventuellement, le nombre de chambres (3) de résonance et **en ce qu'**on solidarise lesdites sections (4, 8) de conduit par leur portion élargie (6, 10) dans la position d'emboîtement relative choisie.

2. Dispositif (1) d'atténuation des bruits, obtenu par mise en oeuvre du procédé selon la revendication 1, pour circuit d'admission de fluide gazeux, pour moteur à combustion interne, ou appareil de climatisation, du type comprenant un conduit (2) d'admission axial communiquant avec des chambres (3) de résonance en disposition coaxiale autour dudit conduit (2) axial,
**caractérisé en ce que** le dispositif est formé d'au moins deux sections de conduit dites l'une (4) maître, l'autre (8) esclave, chaque section (4, 8) de conduit, réalisée d'une seule pièce, présentant au moins une portion (5, 9) axiale, délimitant une portion dudit conduit axial (2), suivie d'une portion (6, 10) élargie formant chambre de résonance, la, ou chaque, portion (6) élargie de l'une (4) des sections de conduit dite maître étant prolongée au moins d'une autre portion (7) axiale, lesdites sections (4, 8) de conduit maître et esclave étant solidarisées en alignement l'une à l'autre par leurs portions (6, 10) élargies, ladite portion (10) élargie de la ou d'au moins une section (8) de conduit esclave s'appliquant à emboîtement sur ladite portion élargie (6) de la ou d'au moins une section (4) de conduit maître, les dimensions de la zone d'emboîtement étant fonction de la dimension et, éventuellement, du nombre de chambres de résonance souhaitées.

3. Dispositif d'atténuation des bruits selon la revendication 2,
**caractérisé en ce que**, à l'état solidarisé en alignement des sections (4, 8) de conduit maître et esclave par leurs portions (6, 10) élargies, la portion (10) élargie de raccordement de la section (8) de conduit esclave vient à recouvrement de l'une des portions (5, 7) axiales de la section (4) de conduit maître.

4. Dispositif d'atténuation des bruits selon l'une des revendications 2 et 3,
**caractérisé en ce que** la ou au moins l'une (4) des sections de conduit dite maître présente au moins un conduit (5) cylindrique axial suivi d'un élargissement (6) cylindrique co-axial audit conduit (5) et délimitant le volume de la chambre (3) de résonance, cet élargissement (6) étant prolongé d'un conduit (7) cylindrique axial, les conduits (5, 7) cylindriques axiaux étant, de préférence, de diamètres identiques.

5. Dispositif d'atténuation des bruits selon l'une des revendications 2 à 4,
**caractérisé en ce que** la ou au moins l'une des sections (4) de conduit maître présente, interposées entre deux portions (5, 7) axiales, au moins deux portions (6) élargies séparées l'une de l'autre par une portion (7) axiale.

6. Dispositif d'atténuation des bruits selon l'une des revendications 2 à 5,
**caractérisé en ce que** la ou au moins l'une (8) des sections de conduit dite esclave est formée d'un conduit (9) cylindrique axial suivi d'un élargissement (10) cylindrique coaxial audit conduit (9), cet élargissement (10) étant solidarisé à l'élargissement ou portion (6) élargie d'une section (4) de conduit maître par son bord libre pour former une chambre (3) de résonance.

7. Dispositif d'atténuation des bruits selon l'une des revendications 2 à 6,
**caractérisé en ce qu'**il comporte au moins deux sections (8) de conduit dites esclaves comportant chacune une portion (9) axiale et une portion (10) élargie ou élargissement, les deux sections (8) de conduits esclaves étant disposées de part et d'autre d'une section (4) de conduit dit maître comportant au moins une portion (6) élargie ou élargissement entre deux portions (5, 7) axiales, lesdites sections (4, 8) étant solidarisées en alignement entre elles par leurs portions (6, 10) élargies pour former autour et le long du conduit (2) axial une succession de chambres (3) de résonance.

8. Dispositif d'atténuation des bruits selon la revendication 7,
**caractérisé en ce qu'**au moins une des portions (5, 7) axiales de la section (4) de conduit maître est pourvue d'au moins d'un orifice (11) de communication de la portion (5, 7) axiale avec l'extérieur de ladite section (4).

9. Dispositif d'atténuation des bruits selon la revendication 7,
**caractérisé en ce qu'**une seule soudure raccorde simultanément les portions (10) élargies des deux sections (8) de conduit esclaves à la portion (6) élargie de la section (4) de conduit maître.

10. Dispositif d'atténuation des bruits selon l'une des revendications 2 à 9,
**caractérisé en ce** chaque section (4, 8) de conduit est une section métallique assemblée à une autre section de conduit par soudure.

## Claims

1. A method for manufacturing a noise abatement device integrated into an air intake circuit for an internal combustion engine or air conditioner, the noise abatement device comprising an axial intake duct (2) being incorporated into said air intake circuit by forming an air intake duct section of said circuit, the axial intake duct (2) communicating with resonant chambers (3) coaxially arranged around said axial duct (2), and being formed of at least two duct sections (4, 8), one being a so-called master section (4), the other a slave section (8), each duct section (4, 8) having at least one axial portion (5, 9), delimiting a portion of said axial duct (2), followed by an expanded resonant chamber portion (6, 10), the or each expanded portion of one of the so-called master sections (4) being extended at least by one other axial portion (7),
**characterized in that** each duct section (4, 8) is made in one piece, that said expanded portion (10) of the or of at least one slave duct section (8) is fittingly applied to said expanded portion (6) of the or of at least one master duct section (4), that said fitted expanded portions (6, 10) are made to slide with respect to each other so as to adjust the dimension and, possibly the number of resonant chambers (3), and that said duct sections (4, 8) are made integral via the expanded portion (6, 10) thereof in the chosen relative fitting position.

2. A noise abatement device (1), obtained by implementing the method according to claim 1, for a gaseous fluid intake circuit, for an internal combustion engine or air conditioner, of the type comprising an axial intake duct (2) communicating with resonant chambers (3) coaxially arranged around said axial duct (2),
**characterized in that** the device is formed of at least two duct sections, one being the so-called master section (4), the other the slave section (8), each duct section (4, 8), which is made in one piece, having at least one axial portion (5, 9) delimiting a portion of said axial duct (2), followed by an expanded resonant chamber portion (6, 10), the or each expanded portion (6) of one (4) of the so-called master duct sections being extended by at least one other axial portion (7), said master and slave duct sections (4, 8) being made integral in alignment with each other via their expanded portions (6, 10), said expanded portion (10) of the or of at least one slave duct section (8) being fittingly applied to said expanded portion (6) of the or of at least one master duct section (4), the dimensions of the fitting zone being dependent on the dimension and, possibly the number of desired resonant chambers.

3. The noise abatement device according to claim 2, **characterized in that**, in the state where the master and slave duct sections (4, 8) are integrally aligned via the expanded portions (6, 10) thereof, the expanded portion (10) connecting the slave duct section (8) overlaps with one of the axial portions (5, 7) of the master duct section (4).

4. The noise abatement device according to any of claims 2 and 3, **characterized in that** the or at least one (4) of the so-called master duct sections has at least one axial cylindrical duct (5) followed by a cylindrical expansion (6) coaxial with said duct (5) and delimiting the volume of the resonant chamber (3), the expansion (6) being extended by an axial cylindrical duct (7), the axial cylindrical ducts (5, 7) preferably having the same diameter.

5. The noise abatement device according to any of claims 2 to 4, **characterized in that** the or at least one of the master duct sections (4) has, inserted between two axial portions (5, 7), at least two expanded portions (6) separated from each other by an axial portion (7).

6. The noise abatement device according to any of claims 2 to 5, **characterized in that** the or at least one (8) of the so-called slave duct sections is formed by an axial cylindrical duct (9) followed by a cylindrical expansion (10) coaxial with said duct (9), the expansion (10) being made integral with the expansion or expanded portion (6) of a master duct section (4) via the free edge thereof so as to form a resonant chamber (3).

7. The noise abatement device according to any of claims 2 to 6, **characterized in that** it comprises at least two so-called slave duct sections (8) each comprising an axial portion (9) and an expanded portion (10) or expansion, both slave duct sections (8) being arranged on either side of a so-called master duct section (4) comprising at least one expanded portion (6) or expansion between two axial portions (5, 7), said sections (4, 8) being made integral in alignment with each other via the expanded portions (6, 10) thereof so as to form around and along the axial duct (2) a series of resonant chambers (3).

8. The noise abatement device according to claim 7, **characterized in that** at least one of the axial portions (5, 7) of the master duct section (4) is provided with at least one orifice (11) communicating the axial portion (5, 7) with the outside of said section (4).

9. The noise abatement device according to claim 7, **characterized in that** a single weld simultaneously connects the expanded portions (10) of the two slave duct sections (8) to the expanded portion (6) of the master duct section (4).

10. The noise abatement device according to any of claims 2 to 9, **characterized in that** each duct section (4, 8) is a metallic section assembled to another duct section by welding.

## Patentansprüche

1. Verfahren zum Herstellen einer Lärmdämpfungsvorrichtung, die in einen Lufteinlasskreislauf für eine Verbrennungskraftmaschine oder ein Klimagerät integriert ist, wobei die Lärmdämpfungsvorrichtung, die eine axiale Einlassleitung (2) umfasst, sich in den Lufteinlasskreislauf integriert, indem sie ein Lufteinlass-Leitungsteilstück des Kreislaufs bildet, wobei diese axiale Einlassleitung (2) mit Resonanzkammern (3) in Verbindung steht, die koaxial um die axiale Leitung (2) herum angeordnet sind, und aus mindestens zwei Leitungsteilstücken (4, 8), von denen eines ein so genanntes Hauptteilstück (4) und das andere ein so genanntes Nebenteilstück (8) ist, gebildet wird, wobei jedes Leitungsteilstück (4, 8) mindestens einen axialen Abschnitt (5, 9) aufweist, der einen Abschnitt der axialen Leitung (2) begrenzt, auf den ein aufgeweiteter Resonanzkammerabschnitt (6, 10) folgt, wobei der oder jeder aufgeweitete Abschnitt eines (4) der so genannten Hauptteilstücke durch mindestens einen anderen axialen Abschnitt (7) verlängert wird,
**dadurch gekennzeichnet, dass** jedes Leitungsteilstück (4, 8) aus einem Stück ausgebildet ist, dass der aufgeweitete Abschnitt (10) des oder mindestens eines Nebenleitungsteilstücks (8) durch Anstecken an den aufgeweiteten Abschnitt (6) des oder mindestens eines Hauptleitungsteilstücks (4) angebracht wird, dass die angesteckten aufgeweiteten Abschnitte (6, 10) zueinander verschoben werden, um die Größe und gegebenenfalls die Anzahl von Resonanzkammern (3) einzustellen, und dass die Leitungsteilstücke (4, 8) über ihren aufgeweiteten Abschnitt (6, 10) in der gewählten relativen Ansteckposition fest verbunden werden.

2. Lärmdämpfungsvorrichtung (1), die durch Umsetzen des Verfahrens nach Anspruch 1 erzielt wird, für einen Einlasskreislauf für ein gasförmiges Fluid, für eine Verbrennungskraftmaschine oder ein Klimagerät, von der Art, die eine axiale Einlassleitung (2) umfasst, die mit Resonanzkammern (3) in Verbindung steht, die koaxial um die axiale Leitung (2) herum angeordnet sind,
**dadurch gekennzeichnet, dass** die Vorrichtung aus mindestens zwei Leitungsteilstücken gebildet ist, von denen eines ein so genanntes Hauptteilstück (4) und das andere ein so genanntes Nebenteilstück (8) ist, wobei jedes Leitungsteilstück (4, 8), aus einem Stück ausgebildet ist, das mindestens einen axialen Abschnitt (5, 9) aufweist, der einen Abschnitt der axialen Leitung (2) begrenzt, auf den ein aufgeweiteter Resonanzkammerabschnitt (6, 10) folgt, wobei der oder jeder aufgeweitete Abschnitt (6) des einen (4) der so genannten Hauptteilstücke (4) durch mindestens einen anderen axialen Abschnitt (7) verlängert wird, wobei die Haupt- und Nebenleitungsteilstücke (4, 8) aufeinander ausgerichtet über ihre aufgeweiteten Abschnitte (6, 10) fest verbunden sind, wobei der aufgeweitete Abschnitt (10) des oder mindestens eines Nebenleitungsteilstücks (8) durch Anstecken an den aufgeweiteten Abschnitt (6) des oder mindestens eines Hauptleitungsteilstücks (4) angebracht wird, wobei die Dimensionen des Ansteckbereichs von der Dimension und gegebenenfalls von der Anzahl der gewünschten Resonanzkammern abhängig sind.

3. Lärmdämpfungsvorrichtung nach Anspruch 2, **dadurch gekennzeichnet, dass** in dem Zustand der Haupt- und Nebenleitungsteilstücke (4, 8), in dem sie über ihre aufgeweiteten Abschnitte (6, 10) ausgerichtet fest verbunden sind, der aufgeweitete Abschnitt (10) zum Anschließen des Nebenleitungsteilstücks (8) sich mit einem der axialen Abschnitte (5, 7) des Hauptleitungsteilstücks (4) deckt.

4. Lärmdämpfungsvorrichtung nach einem der Ansprüche 2 und 3, **dadurch gekennzeichnet, dass** das oder mindestens eines (4) der so genannten Hauptleitungsteilstücke mindestens eine axiale zylindrische Leitung (5) aufweist, auf die eine zylindrische Aufweitung (6) folgt, die zu der Leitung (5) koaxial ist und das Volumen der Resonanzkammer (3) begrenzt, wobei diese Aufweitung (6) durch eine axiale zylindrische Leitung (7) verlängert wird, wobei die axialen zylindrischen Leitungen (5, 7) bevorzugt den gleichen Durchmesser aufweisen.

5. Lärmdämpfungsvorrichtung nach einem der Ansprüche 2 bis 4, **dadurch gekennzeichnet, dass** das oder mindestens eines der Hauptleitungsteilstücke (4) zwischen zwei axialen Abschnitten (5, 7) eingeschoben mindestens zwei aufgeweitete Abschnitte (6) aufweist, die durch einen axialen Abschnitt (7) voneinander getrennt sind.

6. Lärmdämpfungsvorrichtung nach einem der Ansprüche 2 bis 5, **dadurch gekennzeichnet, dass** das oder mindestens eines der so genannten Nebenleitungsteilstücke (8) durch eine axiale zylindrische Leitung (9) gebildet wird, auf die eine zylindrische Aufweitung (10) folgt, die zu der Leitung (9) koaxial ist, wobei diese Aufweitung (10) mit der Aufweitung oder dem aufgeweiteten Abschnitt (6) eines Hauptleitungsteilstücks (4) über seine freie Kante fest verbunden ist, um eine Resonanzkammer (3) zu bilden.

7. Lärmdämpfungsvorrichtung nach einem der Ansprüche 2 bis 6, **dadurch gekennzeichnet, dass** sie mindestens zwei so genannte Nebenleitungsteilstücke (8) umfasst, die jeweils einen axialen Abschnitt (9) und einen aufgeweiteten Abschnitt (10) bzw. eine Ausweitung umfassen, wobei die beiden Nebenleitungsteilstücke (8) auf beiden Seiten eines so genannten Hauptleitungsteilstücks (4) angeordnet sind, das mindestens einen aufgeweiteten Abschnitt (6) bzw. eine Ausweitung zwischen zwei axialen Abschnitten (5, 7) aufweist, wobei die Abschnitte (4, 8) aufeinander ausgerichtet über ihre aufgeweiteten Abschnitte (6, 10) fest verbunden sind, um um die axiale Leitung (2) und an dieser entlang eine Reihe von Resonanzkammern (3) zu bilden.

8. Lärmdämpfungsvorrichtung nach Anspruch 7, **dadurch gekennzeichnet, dass** mindestens einer der axialen Abschnitte (5, 7) des Hauptleitungsteilstücks (4) mit mindestens einer Öffnung (11) zum Verbinden des axialen Abschnitts (5, 7) mit dem Äußern des Teilstücks (4) versehen ist.

9. Lärmdämpfungsvorrichtung nach Anspruch 7, **dadurch gekennzeichnet, dass** eine einzige Schweißstelle die aufgeweiteten Abschnitte (10) der beiden Nebenleitungsteilstücke (8) mit dem aufgeweiteten Abschnitt (6) des Hauptleitungsteilstücks (4) gleichzeitig verbindet.

10. Lärmdämpfungsvorrichtung nach einem der Ansprüche 2 bis 9, **dadurch gekennzeichnet, dass** jedes Leitungsteilstück (4, 8) ein metallisches Teilstück ist, das mit einem anderen Leitungsteilstück durch Schweißen zusammengefügt wird.
